# EUROPÄISCHE PATENTSCHRIFT

(11) **EP 3 507 548 B1**
(45) Veröffentlichungstag und Bekanntmachung des Hinweises auf die Patenterteilung: **11.11.2020**
(21) Anmeldenummer: 17758817.5
(22) Anmeldetag: 10.08.2017
(51) Int. Cl.: F16B 41/00, F24C 15/08, F16B 37/06

(54) **HAUSHALTSGERÄT MIT EINEM VERBINDUNGSELEMENT**
DOMESTIC APPLIANCE HAVING A CONNECTING ELEMENT
APPAREIL ÉLECTROMÉNAGER COMPRENANT UN ÉLÉMENT DE LIAISON

(30) Priorität: 30.08.2016 DE 102016216288
(43) Veröffentlichungstag der Anmeldung: 10.07.2019
(73) Patentinhaber: BSH Hausgeräte GmbH, 81739 München (DE)
(72) Erfinder: MALLINGER, Peter, 83301 Traunreut (DE); BANDOV, Ivanko, 83301 Traunreut (DE); SCHWARZER, Klaus, 94428 Eichendorf (DE); STEINBECK, Martin-Ernst, 83342 Tacherting (DE)
(86) Internationale Anmeldenummer: PCT/EP2017/070280
(87) Internationale Veröffentlichungsnummer: WO 2018/041585

(56) Entgegenhaltungen:
- EP-A2- 1 591 671
- DE-A1- 3 921 119
- DE-A1-102010 023 809
- DE-U1-202008 010 715
- DE-U1-202008 010 715

## Beschreibung

Die Erfindung betrifft ein Haushaltsgerät, insbesondere Gargerät, nach dem Oberbegriff des Anspruchs 1 sowie ein Verfahren nach Anspruch 14.

Bei Haushaltsgeräten, insbesondere Gargeräten ist es üblich, Anbauteile wie Grillheizkörper, Luftleitbleche, Führungsschienen für Gargutträger und dergleichen an Tragteile wie Ofenmuffel, Gehäuseteile oder dergleichen zu befestigen. Diese Anbauteile werden üblicherweise mittels Schrauben an den Tragteilen fixiert, wobei hierfür die betreffenden Tragteile mit Gewindebohrungen versehen sind. Um einer Korrosion der Bauteile entgegenzuwirken, werden zumindest die Sichtflächen der Tragteile mit einer Emailbeschichtung versehen. Ein derartiges Haushaltsgerät ist in der DE 20 2008 010 715 U1 offenbart.

Um möglichst kosten- und energieeffiziente Haushaltsgeräte herstellen zu können, werden möglichst dünnwandige Tragteile verwendet, welche jedoch keine ausreichend gute Befestigungsmöglichkeit für eine Gewindebohrung bilden. Zudem haben Versuche gezeigt, dass sich durch die eingeleiteten Anschraubkräfte im Bereich der Gewindebohrungen, aufgrund des sich verbiegenden Blechs, unerwünschte Risse im Email der Beschichtung bilden, was wiederum zu Korrosion führt.

Um dem entgegenzuwirken ist aus der US 3 331 273 A eine Scheibe bekannt, welche ein Gewinde aufweist und mittels einer großflächigen Auflagefläche die Anschraubkräfte materialschonend an das Tragteil weiterleiten kann. Die Erfahrung hat gezeigt, dass bei dieser Befestigung der im Garraum befindliche druckbeaufschlagte Wrasen zwischen der Auflagefläche des Tragteils und der Scheibe entweicht, was zur Undichtigkeit des Systems und zu Korrosion zwischen den Teilen führt. Zudem wirkt eine solche Scheibe, welche auf der Rückseite des Tragteils zugeführt und dort gehaltert werden muss bevor sie von der Vorderseite her verschraubt werden kann, der Montagefreundlichkeit entgegen.

Aufgabe der Erfindung ist es, bekannte Haushaltsgeräte zu verbessern. Eine mögliche Verbesserung ist es, die Dichtigkeit sowie die Korrosionsbeständigkeit bei Haushaltsgeräten zu verbessern und eine einfache Montage von Anbauteilen an Tragteilen sicher zu stellen.

Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

Die Erfindung geht aus von einem Haushaltsgerät, insbesondere Gargerät, mit einem Tragteil, einem Anbauteil und einer Schraube, wobei das Anbauteil durch die Schraube am Tragteil befestigt ist. Unter einem Tragteil soll insbesondere ein stabiles, die Struktur des Haushaltsgeräts bildendes Bauteil verstanden werden, wie z.B. ein Gehäuseteil oder ein Garraum, welches geeignet ist, Kräfte aufzunehmen und Anbauteile sicher und stabil zu tragen. Unter einem Anbauteil soll insbesondere ein Grillheizkörper, ein Luftleitblech, eine Führungsschiene oder dergleichen verstanden werden, dass die Stabilität erhöht oder den Funktionsumfang des Haushaltsgeräts erweitert.

Dabei ist ein die Schraube aufnehmendes Verbindungselement an der dem Anbauteil gegenüberliegenden Seite des Tragteils angeschweißt. Unter einem Verbindungselement soll insbesondere ein Bauteil verstanden werden, dass geeignet ist, die Schraube derart aufzunehmen, dass diese das Anbauteil am Tragteil fixieren kann. Unter der dem Anbauteil gegenüberliegenden Seite des Tragteils soll zum Beispiel eine Rückseite einer Backofenseitenwand des Gargeräts verstanden werden, wenn das Anbauteil an einer Vorderseite zu befestigen ist. Unter angeschweißt sollen insbesondere ein Schweißverfahren verstanden werden, welches geeignet ist, das Verbindungsteil unter Anwendung von Wärme und/oder Druck, mit oder ohne Schweißzusatzwerkstoffe, starr an das Tragteil zu binden. Durch diese Befestigung erhält das in der Regel möglichst dünnwandig ausgeführte Tragelement einen stabilen Befestigungspunkt, welcher sonst nur durch eine entsprechend höhere und somit aufwendigere Materialstärke realisierbar wäre. Mittels dieser starren Befestigung des Verbindungselements an der Rückseite des Tragelements wird die Montage des Anbauteils an der Vorderseite vereinfacht, da keine Hand oder kein zusätzliches Hilfsmittel zum Halten des Verbindungselements notwendig ist, während an der Vorderseite das Anbauteil angeschraubt wird. Dieser Aufbau ist zudem besonders vorteilhaft, wenn am Haushaltsgerät, beispielsweise durch den Kundendienst, ein Anbauteil, z.B. das Luftleitblech, getauscht werden muss. Hierbei kann im eingebauten Zustand des Gargeräts im Küchenmöbel das alte Luftleitblech abgeschraubt werden, denn das Verbindungselement ist am Tragteil fixiert. Andernfalls würde das Verbindungselement in den von außen nicht zugänglichen Bereich zwischen Backrohr und Gehäuse fallen und ein kompletter Ausbau sowie Demontage des Gargeräts wäre notwendig.

Erfindungsgemäß ist das Verbindungselement mittels einem Widerstandsbuckelschweißverfahren an das Tragteil angeschweißt, vorzugsweise wobei die die die Bauteile verbindende Schweißnaht durch einen beim Schweißvorgang abgeschmolzenen Vorsprung gebildet ist. Widerstandsbuckelschweißen ist ein Widerstandspress-schweißverfahren zum Verschweißen von meist blechförmigen Metallteilen unterschiedlichster Abmessungen und Materialien, wobei die zum Schweißen notwendige Stromdichte durch die Bauteilform generiert wird. Beim Buckelschweißen findet die größte Erwärmung an der Buckelspitze statt, da dort der größte Widerstand vorliegt. Unter einem Vorsprung soll insbesondere ein Buckel verstanden werden, welcher dem Widerstandsbuckelschweißen als Elektrode dient, in Anlage zum Tragteil aufgrund des Stromflusses schmilzt und eine die Bauteile verbindende Schweißnaht erzeugt.

Erfindungsgemäß ist die Schweißnaht dicht, insbesondere gasdicht ausgeführt. Durch die umlaufend durchgängige Schweißnaht, welche sich dichtend um den Aufnahmebereich erstreckt wird eine Gasdichtigkeit erzeugt, welche verhindert, dass der im Garraum befindliche druckbeaufschlagte Wrasen zwischen der Auflagefläche des Verbindungselements und dem Tragteil entweichen kann. Dadurch wir Undichtigkeit im System verhindert und Korrosion zwischen Auflagefläche und Tragteil verhindert.

Vorzugsweise weist der Vorsprung auf der Anlagefläche eine Höhe H auf, wobei die Höhe H zwischen 0,1 und 1 mm, vorzugsweise 0,3 bis 0,7 mm insbesondere 0,55 mm beträgt. Der Vorsprung ist aus dem Material des Verbindungselements gebildet und erstreckt sich aus dessen Oberfläche um die Höhe H. Der Vorsprung kann beispielsweise durch materialabnehmendes Abdrehen aus dem Halbzeug des Verbindungselements oder durch Materialauftrag auf der Scheibe entstehen. Ein solch ausgebildeter Vorsprung bildet einen besonders guten Buckel für das Schweißverfahren.

Vorzugsweise wird der Vorsprung durch eine Ausprägung aus dem Verbindungselement geformt, wobei die Ausprägung vorzugsweise durch ein Prägeverfahren aus dem dünnwandigen Metall herausgestellt ist. Unter einer Ausprägung soll die Verformung verstanden werden, welche sich durch ein Prägeverfahren, insbesondere einem Münzprägeverfahren ergibt. Hierzu wird eine Kontur in die Rückseite des Verbindungselements gepresst, sodass sich der gewünschte Vorsprung auf der Vorderseite zusammen ergibt. Ein solcher Vorsprung ist besonders einfach, vorzugsweise mit dem Tiefziehen und/oder Ausstanzen des Verbindungselements aus einem dünnwandigen Material herstellbar.

Vorzugsweise weist das Verbindungselement einen Aufnahmebereich auf, wobei der Aufnahmebereich vorzugsweise eine Bohrung, einen Kragen oder ein Gewinde aufweist. Um das Anbauteil an dem Tragteil zu befestigen, greift das Schraubelement, vorzugsweise in Form einer Schraube an das Verbindungselement. Hierzu weist das Verbindungselement einen Aufnahmebereich auf, der von einer Bohrung gebildet sein kann, durch die ein metrisches Gewinde der Schraube taucht und auf der Gegenseite in eine Mutter geschraubt wird. Alternativ stellt der Aufnahmebereich eine Bohrung dar, in welche ein Gewinde geschnitten ist oder das Schraubelement ein Gewinde schneidet. Alternativ ist der Aufnahmebereich von einem Kragen gebildet, der vorzugweise rechtwinklig zur Auflagefläche des Verbindungselements abweisend einen Durchbruch bildet in den ein Gewinde geschnitten ist oder das Schraubelement ein Gewinde schneidet. Der Kragen ermöglicht ein längeres Gewinde gegenüber der Bohrung und ermöglicht so eine höhere Anschraubkraft und mindert ein Ausreisen des Gewindes. Umso mehr Gewindegänge im Eingriff sind, desto dichter wird die Schraubverbindung gegenüber dem Gasdruck. Der Durchmesser der Bohrung, des Gewindes oder des Kragens ist auf die Größe der Schraube, insbesondere der selbstfurchenden Schraube abgestimmt.

Vorzugsweise ist der Aufnahmebereich im Zentrum des Verbindungselements angeordnet. Durch diese Ausgestaltung ergibt sich eine besonders einfache Geometrie des Verbindungselements, die besonders bei automatischen Zuführungen im Montageprozess benötigt wird. Vorzugsweise ist der Vorsprung und die Schweißnaht ringförmig um den Aufnahmebereich angeordnet. Durch diese Ausgestaltung des Verbindungselements wird sichergestellt, dass die die beiden Bauteile verbindende Schweißnaht umlaufend und somit ohne Unterbrechung ist. Somit entsteht eine höhere Lastverteilung an der Schweißnaht, insbesondere gegenüber Punktschweißungen.

Vorzugsweise ist das Verbindungselement durch eine umlaufende, vorzugsweise s-förmige Kröpfung im Randbereich tellerförmig ausgebildet. Durch die Tellerform ist das Verbindungselement besonders formstabil und sichert die hohen Anforderungen an die Ebenheit der Anlagefläche des Verbindungselements an das Tragteil, um beim Anlegen ein Taumeln des Verbindungselements und somit eine Fehlfunktion beim Schweißen zu verhindern. Ist die umlaufende Kröpfung des Randbereichs s-förmig ausgebildet, kann ein Funkenüberschlag beim Schweißen besonders effizient verhindert werden, da im Randbereich der Abstand zum anliegenden Bauteil erhöht ist.

Vorzugsweise ist das Verbindungselement rotationssymmetrisch ausgebildet, wodurch eine besonders einfache Geometrie des Verbindungselements entsteht, welches vorzugsweise im Tiefziehverfahren hergestellt wird.

Gemäß einer Variante ist das Tragteil eine Wandung, vorzugsweise eine Rückwand eines Garraums des Gargeräts und/oder das Anbauteil ein Heißluftleitblech des Gargeräts.

Gemäß einer Variante ist das Tragteil eine Wandung, vorzugsweise eine Decke eines Garraums des Gargeräts und/oder das Anbauteil eine Heizkörperbefestigung, vorzugsweise einer Oberhitze des Gargeräts.

Vorzugsweise weist das Tragteil eine Bohrung auf, wobei die Bohrung im Verbindungselement konzentrisch zu einer Bohrung im Tragteil ausgerichtet ist oder falls die Durchmesser unterschiedlich in Größe und/oder Form sind, stimmt zumindest die geometrische Mitte überein. Dadurch ist sichergestellt, dass die in einem Vormontageschritt an den Garraum des Gargeräts befestigten Verbindungselemente die Anbauteile maßhaltig am gewünschten Befestigungsort fixieren.

Vorzugsweise ist die Schraube eine selbstschneidende Schraube oder eine selbstfurchende Schraube, vorzugsweise eine Blechschraube. Durch diese Ausgestaltung des Schraubelements kann auf ein Gewindeschneiden im Aufnahmebereich verzichtet werden und die Schraube schneidet sich selbst ein Gewinde. Dies ist besonders vorteilhaft, wenn das Tragelement, z.B. der Garraum des Gargeräts einer Oberflächenbeschichtung z.B. Emailierung unterzogen wird, und die Schraube über das Anbauteil eine elektrische Kontaktierung, insbesondere zur Erdungsfunktion herstellen soll, wobei das Außengewinde das aufgetragene Email weg kratz und am blanken Blech des Verbindungselements kontaktiert, welches durch die Schweißnaht elektrisch leitend am Tragteil angebunden ist.

Vorzugsweise ist das Verbindungselement aus einem schweißbaren, vorzugsweise dünnwandigem Metall und/oder einem Kunststoff gebildet. Als besonders vorteilhafte Materialen haben sich Stahlblech, Edelstahl, Chromstahl oder auch Aluminium erwiesen. Alternativ kann das Verbindungselement aber auch aus einem Kunststoff gebildet sein, wobei dieses mittels Ultraschall- oder Laserschweißen am Tragelement angebunden ist.

Vorzugsweise weist das Tragelement eine Beschichtung, vorzugsweise eine Emailbeschichtung auf. Um der Korrosion der Bauteile, insbesondere der sichtbaren Bauteile am Haushaltsgerät entgegenzuwirken, werden diese einer Oberflächenbehandlung unterzogen. Email hat sich dabei, insbesondere bei Haushaltsgeräten mit Hochtemperaturanwendungen, wie z.B. Gargeräten als vorteilhaft erwiesen, da das Email temperaturstabil, lebensmittelecht sowie abriebfest ist.

Desweiteren wird ein Verfahren zum Befestigen eines Anbauteils an einem Tragteil eines Haushaltsgeräts aufweisend folgende Verfahrensschritte vorgeschlagen.
- Zuführen eines Verbindungsteils an das Tragteil, wobei ein Durchbruch im Verbindungsteil zum Durchbruch im Tragteil, vorzugsweise konzentrisch ausgerichtet wird, um die Bauteile genau zueinander positionieren zu können
- Vereinigen des Verbindungsteils mit dem Tragteil mittels Schweißen, vorzugsweise Widerstandsbuckelschweißen, wobei ein Vorsprung auf einer Anlagefläche des Verbindungsteils schmilzt und als Material für eine Schweißnaht mit dem Tragteil dient, wodurch die beiden Bauteile vereinigt werden und verlier sicher zueinander positioniert sind
- Zuführen des Anbauteils an die dem Verbindungselement gegenüberliegenden Seite des Tragteils, wobei ein Durchbruch im Anbauteil zum Durchbruch des mit dem Tragteil verbundenen Verbindungselement, vorzugsweise konzentrisch ausgerichtet wird
- Befestigen des Anbauteils an dem Tragteil, wobei das Anbauteil mittels eines Schraubelements am Verbindungselement festgeschraubt wird.

Vorzugsweise weist das Verfahren einen zusätzlichen Verfahrensschritt auf, wobei ein
- Oberflächenbeschichten zumindest des Tragelements, insbesondere einer Sichtfläche, vorzugsweise mittels Emailbeschichten, bevorzugt nach dem Vereinigen des Verbindungsteils mit dem Tragteil mittels Schweißen stattfindet.

Weitere Merkmale der Erfindung ergeben sich aus den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsbeispiele von der Erfindung als umfasst und offenbart anzusehen, die in den schematischen Figuren nicht explizit gezeigt und erläutert sind, jedoch durch separierte Merkmalskombinationen aus den erläuterten Ausführungen hervorgehen und erzeugbar sind. Dabei zeigt:
- Fig. 1: eine schematische, perspektivische Darstellung eines Garraums eines Haushaltsgerätes ohne Garraumtür;
- Fig. 2: eine schematische Schnittdarstellung im Bereich der Schraubverbindung;
- Fig. 3: eine schematische Draufsicht auf ein Verbindungselement; und
- Fig. 4: eine schematische Schnittdarstellung eines Verbindungselements.

Gleiche oder funktionsgleiche Elemente werden in den Figuren mit den gleichen Bezugszeichen versehen.

Das Ausführungsbeispiel beschreibt ein Haushaltsgerät in der Ausgestaltung eines als Backofen ausgebildeten Gargeräts. Alternative Haushaltsgeräte wären Mikrowellen, Dampfgarer, Kochfelder, Dunstabzugshauben, Waschmaschinen, Trockner, Geschirspüler, Kühlschränke oder Kaffeemaschinen.

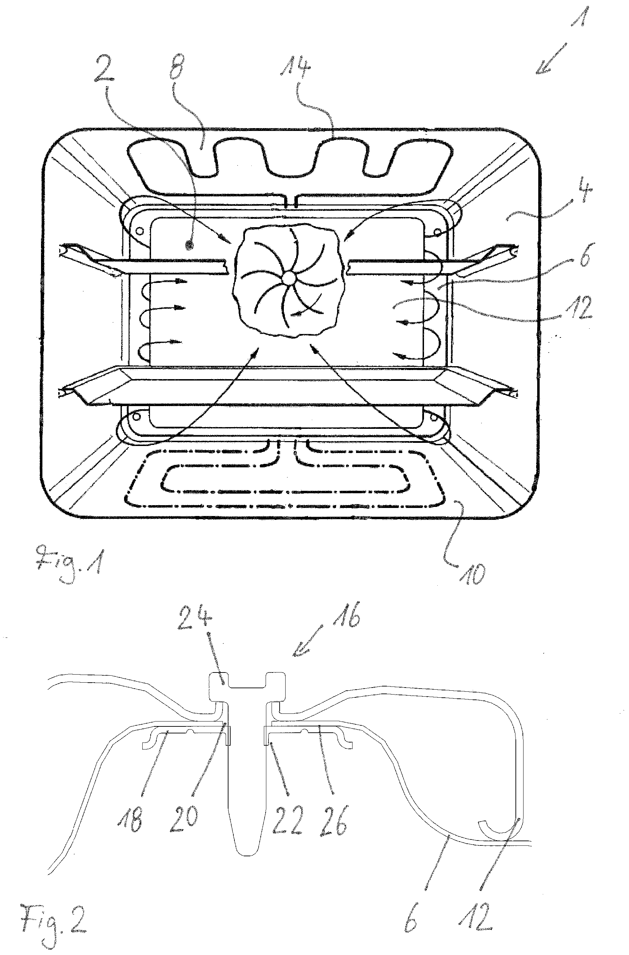

Ein nicht näher dargestellter an sich bekannter Backofen 1 weist gemäß Fig. 1 einen frontseitig verschließbaren und im Wesentlichen quaderförmigen Garraum 2 auf, der frontseitig durch eine drehbar angelenkte Backofentür (nicht gezeigt) verschließbar ist. Begrenzt wir der Garraum 2 von zweier Seitenwände 4, einer Rückwand 6, einer Deckwand 8 und einen Boden 10. Unmittelbar vor der Rückwand 6 des Garraums 2 ist ein Luftleitblech 12 montiert, das sich nahezu über die gesamte Fläche der Rückwand 6 erstreckt. Unmittelbar unterhalb der Deckwand 8 des Garraums 2 ist ein Strahlungsheizkörper in Ausgestaltung eines Grillheizkörpers12 gehaltert, der sich nahezu über die gesamte Fläche der Deckwand 2 erstreckt. Zur Befestigung von Anbauteilen, wie des Luftleitblechs 12 oder des Grillheizkörpers 14 an Tragteilen, wie der Rückwand 6 oder der Deckwand 8 des Garraums, ist eine Schraubverbindung 16 vorgesehen.

Fig. 2 zeigt die Schnittdarstellung einer möglichen Schraubverbindung 16 am Beispiel zwischen dem Tragteil, in Ausgestaltung der Rückwand 6 und dem Anbauteil, in Ausgestaltung des Luftleitblechs12. Dabei ist an der dem Luftleitblech 12 gegenüberliegenden Seite der Rückwand 6 ein Verbindungselement 18 derart angebracht, dass ein Durchbruch 20 in der Rückwand 6 und ein Aufnahmebereich 22 des Verbindungselements 18 zueinander achsgleich ausgereichtet ist. Der Aufnahmebereich 22 ist von einem Kragen gebildet, der - in Einbaulage des Verbinbungselements 18 gesehen - von der Rückwand 6 weg gerichtet ist. Der Kragen 22 weist einen Innendurchmesser auf, in dem eine Blechschraube 24 mittels Gewinde befestigt ist. Um das Lüfterleitbelch 12 sicher an der Rückwand 6 zu befestigen, wird die Schraube 24 durch eine Bohrung am Lüfterleitbelch 12 geschoben. Danach wird die Schraube 24 durch eine Bohrung 20 in der Rückwand 6 geführt und durch eine schraubende Drehbewegung der Schraube 24 in den Kragen 22 gedreht, wobei die selbstfurchende Spitze der Schraube 24 einen festen Gewindesitz formt. Damit das Verbindungselement 18 hohe Kräfte tragen bzw. aufnehmen kann, um diese an das Tragteil weiterzuleiten, ist es starr an das Tragteil mittels einer Schweißverbindung angebunden.

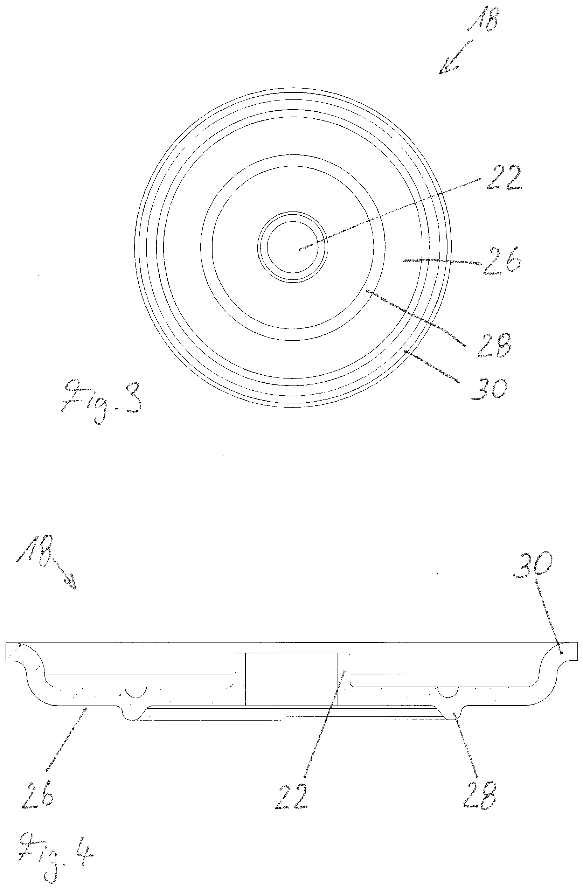

Fig. 3 zeigt eine Draufsicht auf das Verbindungselement 18. Das Verbindungselement 18 ist mittels Tiefzieh- und Stanzverfahren aus einem dünnwandigen Blech heraus gebildet und weist eine Anlagefläche 26 auf, welche in Einbaulage dem Tragteil 6, 8 zugewandt ist. Aus der Anlagefläche 26 heraus erhebt sich ein Vorsprung 28. Dieser Vorsprung weist eine Höhe H, gemessen von der Anlagefläche 26 zum Maximum des Vorsprungs, auf.

Der Vorsprung ist in seiner Höhe H durchgängig sowie umlaufend um den Aufnahmebereich 22 angeordnet und dient im Schweißverfahren als Buckel, welcher schmilzt und eine schlüssige Verbindung zwischen Tragteil 6, 8 und Anbauteil 12, 14 herstellt. Durch diese Ausgestaltung des Vorsprungs 28 ist die Verbindung besonders dicht gegenüber dem im Garraum 2 herrschenden Wrasen, welcher unter leichtem Druck steht und an undichten Stellen aus dem Garraum 2 entweichen kann.

Fig. 4 zeigt eine Seitenansicht des Verbindungselements 18 im Schnitt. Der umlaufende Rand des Verbindungselements 18 weist eine Kröpfung 30 auf, um das Verbindungselement 18 besonders steif auszubilden und eine möglichst ebene Anlagefläche 26 zu gewährleisten, welche nicht durch herstellungsbedingte Stanzgrade im Randbereich beeinflusst wird. Zudem ist die Kröpfung 30 s-förmig von der Anlagefläche 26 weg weisend ausgebildet, wodurch sich ein im Wesentlichen tellerförmiges Verbindungselement ergibt. Im Ausführungsbeispiel weist das Verbindungselement einen Außendurchmesser von 22 mm, eine Blechstärke von 0,7 mm und einen Innendurchmesser am Kragen von 3,55 mm auf.

In den Figuren nicht darstellbar ist eine die Bauteile vor Korrosion schützende Oberflächenbeschichtung, in Ausgestaltung einer Emailschicht, welche nach dem Anschweißen des Anbauteils 12, 14 an dem Tragteil 6, 8, zumindest über die vom Nutzer einsehbaren Sichtflächen aufgetragen wird. Zumeist ebenfalls emaillierte Anbauteile 12,13 werden mittels Schraubelement 24 am Aufnahmebereich 22 befestigt, wobei die selbstfurchende Spitze der Blechschraube 24 das Email im Kragen 24 wegschabt und eine elektrische Kontaktierung zwischen Anbauteil 12, 14, Tragteil 6, 8 und Verbindungselement 18 herstellt, was bei Mikrowellengeräten besonders wichtig ist. Dabei stellt die Schweißverbindung eine besonders gute und langlebige elektrische Kontaktierung zwischen den Bauteilen sicher, da diese stoffschlüssig ist.

Für den Fachmann ist erkennbar, dass die Erfindung nicht auf das dargestellte Ausführungsbeispiel beschränkt ist, sondern dass eine Vielzahl von Varianten und Abwandlungen im Rahmen der Ansprüche ebenfalls möglich sind.

### BEZUGSZEICHENLISTE

- 1: Haushaltsgerät, Gargerät, Backofen
- 2: Garraum
- 4: Seitenwand
- 6: Tragteil, Rückwand
- 8: Tragteil, Deckwand
- 10: Boden
- 12: Anbauteil, Luftleitblech
- 14: Anbauteil, Grillheizkörper
- 16: Schraubverbindung
- 18: Verbindungselement
- 20: Durchbruch
- 22: Aufnahmebereich, Kragen
- 24: Schraubelement, Blechschraube
- 26: Anlagefläche
- 28: Vorsprung
- 30: Kröpfung
- H: Höhe des Vorsprungs

## Patentansprüche

1. Haushaltsgerät (1), insbesondere Gargerät, mit einem Tragteil (6, 8), einem Anbauteil (12, 14) und einer Schraubverbindung (16), wobei das Anbauteil (12, 14) durch eine Schraube (24) am Tragteil (6, 8) befestigt ist, wobei ein die Schraube (24) aufnehmendes Verbindungselement (18) an der dem Anbauteil (12, 14) gegenüberliegenden Seite des Tragteils (6, 8) angeschweißt ist und das Verbindungselement (18) einen Aufnahmebereich (22) aufweist, **dadurch gekennzeichnet, dass** das Verbindungselement (18) mittels Widerstandsbuckelschweißen an das Tragteil (6, 8) angeschweißt ist, wobei die die Bauteile verbindende Schweißnaht durch einen beim Schweißvorgang abgeschmolzenen Vorsprung (28) gebildet ist, und wobei der Vorsprung (28) und die Schweißnaht ringförmig um den Aufnahmebereich (22) angeordnet sind und die Schweißnaht dicht, insbesondere gasdicht ausgeführt ist.

2. Haushaltsgerät nach Anspruch 1, **dadurch gekennzeichnet, dass** der Vorsprung (28) auf einer Anlagefläche (26) des Verbindungselements (18) eine Höhe (H) aufweist, wobei die Höhe (H) zwischen 0,1 und 1 mm, vorzugsweise 0,3 bis 0,7 mm insbesondere 0,55 mm beträgt.

3. Haushaltsgerät nach Anspruch 1 oder 2, **dadurch gekennzeichnet, dass** der Vorsprung (28) eine Ausprägung ist, wobei die Ausprägung vorzugsweise durch ein Prägeverfahren aus dem dünnwandigen Metall des Verbindungselements (18) herausgestellt ist.

4. Haushaltsgerät nach einem der vorangegangenen Ansprüche, **dadurch gekennzeichnet, dass** der Aufnahmebereich (22) vorzugsweise eine Bohrung, ein Kragen oder ein Gewinde ist.

5. Haushaltsgerät nach Anspruch 3 oder 4, **dadurch gekennzeichnet, dass** der Aufnahmebereich (22) im Zentrum des Verbindungselements (18) angeordnet ist.

6. Haushaltsgerät nach einem der vorangegangenen Ansprüche, **dadurch gekennzeichnet, dass** das Verbindungselement (18) durch eine umlaufende, vorzugsweise eine s-förmige Kröpfung (30) im Randbereich tellerförmig ausgebildet ist.

7. Haushaltsgerät nach einem der vorangegangenen Ansprüche, **dadurch gekennzeichnet, dass** Verbindungselement (18) rotationssymmetrisch ausgebildet ist.

8. Haushaltsgerät nach einem der vorangegangenen Ansprüche, **dadurch gekennzeichnet, dass** das Tragteil (6) eine Wandung, vorzugsweise eine Rückwand (6) eines Garraums (2) des Gargeräts (1) ist und/oder das Anbauteil (12) ein Luftleitblech des Gargeräts (1) ist.

9. Haushaltsgerät nach einem der Ansprüche 1 bis 7, **dadurch gekennzeichnet, dass** das Tragteil (8) eine Wandung, vorzugsweise eine Deckwand (8) eines Garraums (2) des Gargeräts (1) ist und/oder das Anbauteil (14) eine Heizkörperbefestigung, vorzugsweise ein Grillheizkörper (14) des Gargeräts (1) ist.

10. Haushaltsgerät nach einem der vorangegangenen Ansprüche, **dadurch gekennzeichnet, dass** das Tragteil (6, 8) eine Bohrung (20) aufweist, wobei der Aufnahmebereich (22) im Verbindungselement (18) konzentrisch zu der Bohrung (20) im Tragteil (6, 8) ausgerichtet ist.

11. Haushaltsgerät nach einem der vorangegangenen Ansprüche, **dadurch gekennzeichnet, dass** die Schraube (24) eine selbstschneidende Schraube oder eine selbstfurchende Schraube, vorzugsweise eine Blechschraube ist.

12. Haushaltsgerät nach einem der vorangegangenen Ansprüche, **dadurch gekennzeichnet, dass** das Verbindungselement (18) aus einem schweißbaren, vorzugsweise dünnwandigem Metall und/oder einem Kunststoff gebildet ist.

13. Haushaltsgerät nach einem der vorangegangenen Ansprüche, **dadurch gekennzeichnet, dass** zumindest das Tragelement (6, 8) eine Beschichtung, vorzugsweise eine Emailbeschichtung aufweist.

14. Verfahren zum Befestigen eines Anbauteils (12, 14) an einem Tragteil (6, 8) eines Haushaltsgeräts (1) nach einem der Ansprüche 1 bis 13, aufweisend folgende Verfahrensschritte:
- Zuführen eines Verbindungsteils (18) an das Tragteil (6, 8), wobei ein Aufnahmebereich (22) im Verbindungsteil (18) zum Durchbruch (22) im Tragteil (6, 8), vorzugsweise konzentrisch ausgerichtet wird
- Vereinigen des Verbindungsteils (18) mit dem Tragteil (6, 8) mittels Schweißen, vorzugsweise Widerstandsbuckelschweißen, wobei ein Vorsprung (28) auf einer Anlagefläche (26) des Verbindungsteils (18) schmilzt und als Material für eine Schweißnaht mit dem Tragteil (6, 8) dient, wodurch die beiden Bauteile vereinigt werden
- Zuführen des Anbauteils (12, 14) an die dem Verbindungselement (18) gegenüberliegenden Seite des Tragteils (6, 8), wobei ein Durchbruch im Anbauteil (12, 14) zum Aufnahmebereich (22) des mit dem Tragteil (6, 8) verbundenen Verbindungselement (18), vorzugsweise konzentrisch ausgerichtet wird
- Befestigen des Anbauteils (12, 14) an dem Tragteil (6, 8), wobei das Anbauteil (12, 14) mittels eines Schraubelements (24) am Verbindungselement (18) festgeschraubt wird.

15. Verfahren nach Anspruch 14, aufweisend den zusätzlichen Verfahrensschritt
- Oberflächenbeschichten zumindest des Tragelements (6, 8), insbesondere einer Sichtfläche, vorzugsweise mittels Emailbeschichten, bevorzugt nach dem Vereinigen des Verbindungsteils (18) mit dem Tragteil (6, 8) mittels Schweißen.

## Claims

1. Household appliance (1), in particular cooking appliance, with a supporting part (6, 8), an attachment part (12, 14) and a screw connection (16), wherein the attachment part (12, 14) is fastened to the supporting part (6, 8) by a screw (24), wherein a connecting element (18) receiving the screw (24) is welded onto the side of the supporting part (6, 8) opposite the attachment part (12, 14) and the connecting element (18) has a receiving region (22), **characterised in that** the connecting element (18) is welded onto the supporting part (6, 8) by means of resistance projection welding, wherein the weld seam connecting the components is formed by a protrusion (28) fused during the welding procedure, and wherein the protrusion (28) and the weld seam are arranged in an annular manner around the receiving region (22) and the weld seam is designed to be impermeable, in particular impermeable to gas.

2. Household appliance according to claim 1, **characterised in that** the protrusion (28) has a height (H) at a contact area (26) of the connecting element (18), wherein the height (H) amounts to between 0.1 and 1 mm, preferably 0.3 to 0.7 mm, in particular 0.55 mm.

3. Household appliance according to claim 1 or 2, **characterised in that** the protrusion (28) is a shaped area, wherein the shaped area is preferably made apparent from a thin-walled metal of the connecting element (18) by a shaping method.

4. Household appliance according to one of the preceding claims, **characterised in that** the receiving region (22) is preferably a borehole, a collar or a thread.

5. Household appliance according to claim 3 or 4, **characterised in that** the receiving region (22) is arranged in the centre of the connecting element (18).

6. Household appliance according to one of the preceding claims, **characterised in that** the connecting element (18) is embodied in the shape of a plate by a circumferential, preferably an s-shaped offset (30) in the edge region.

7. Household appliance according to one of the preceding claims, **characterised in that** the connecting element (18) is embodied with rotational symmetry.

8. Household appliance according to one of the preceding claims, **characterised in that** the supporting part (6) is a wall, preferably a rear wall (6) of a cooking compartment (2) of the cooking appliance (1) and/or the attachment part (12) is an air baffle of the cooking appliance (1).

9. Household appliance according to one of claims 1 to 7, **characterised in that** the supporting part (8) is a wall, preferably a top wall (8) of a cooking compartment (2) of the cooking appliance (1) and/or the attachment part (14) is a heating element fastening, preferably a grill heating element (14) of the cooking appliance (1).

10. Household appliance according to one of the preceding claims, **characterised in that** the supporting part (6, 8) has a borehole (20), wherein the receiving region (22) in the connecting element (18) is oriented concentrically with the borehole (20) in the supporting part (6, 8).

11. Household appliance according to one of the preceding claims, **characterised in that** the screw (24) is a self-cutting screw or a self-tapping screw, preferably a sheet metal screw.

12. Household appliance according to one of the preceding claims, **characterised in that** the connecting element (18) is formed from a weldable, preferably thin-walled metal and/or a plastic.

13. Household appliance according to one of the preceding claims, **characterised in that** at least the supporting element (6, 8) has a coating, preferably an enamel coating.

14. Method for fastening an attachment part (12, 14) to a supporting part (6, 8) of a household appliance (1) according to one of claims 1 to 13, having the following method steps:
- guiding a connecting part (18) to the supporting part (6, 8), wherein a receiving region (22) in the connecting part (18) is oriented towards the perforation (22) in the supporting part (6, 8), preferably is oriented concentrically therewith.
- joining the connecting part (18) to the supporting part (6, 8) by means of welding, preferably resistance projection welding, wherein a protrusion (28) on a contact area (26) of the connecting part (18) melts and acts as a material for a weld seam with the supporting part (6, 8), whereby the two components are joined,
- guiding the attachment part (12, 14) to the side of the supporting part (6, 8) opposite the connecting element (18), wherein a perforation in the attachment part (12, 14) is oriented towards the receiving region (22) of the connecting element (18) connected to the supporting part (6, 8), preferably is oriented concentrically therewith,
- fastening the attachment part (12, 14) to the supporting part (6, 8), wherein the attachment part (12, 14) is screwed tightly to the connecting element (18) by means of a screw element (24).

15. Method according to claim 14, having the additional method step
- surface-coating at least the supporting element (6, 8), in particular a visible area, preferably by means of enamel coating, preferably after joining the connecting part (18) to the supporting part (6, 8) by means of welding.

## Revendications

1. Appareil domestique (1), en particulier appareil de cuisson, comportant un élément porteur (6, 8), un élément rapporté (12, 14) et une liaison à vis (16), dans lequel l'élément rapporté (12, 14) est fixé par le biais d'une vis (24) à l'élément porteur (6, 8), dans lequel un élément de liaison (18) logé dans la vis (24) est soudé au niveau du côté de l'élément porteur (6, 8) opposé à l'élément rapporté (12, 14) et l'élément de liaison (18) présente une zone de logement (22), **caractérisé en ce que** l'élément de liaison (18) est soudé à l'élément porteur (6, 8) au moyen d'un soudage par résistance par bossage, dans lequel le joint de soudure reliant les composants est formé par le biais d'une saillie (28) fondue lors d'un processus de soudage, et dans lequel la saillie (28) et le joint de soudure sont disposés de manière annulaire autour de la zone de logement (22) et le joint de soudure est réalisé de manière étanche, en particulier de manière étanche aux gaz.

2. Appareil domestique selon la revendication 1, **caractérisé en ce que** la saillie (28) présente une hauteur (H) sur une surface d'appui (26) de l'élément de liaison (18), dans lequel la hauteur (H) est comprise entre 0,1 et 1 mm, de préférence 0,3 à 0,7 mm, en particulier 0,55 mm.

3. Appareil domestique selon la revendication 1 ou 2, **caractérisé en ce que** la saillie (28) est un gaufrage, dans lequel le gaufrage est de préférence révélé par le biais d'un procédé de gaufrage à partir d'un métal à paroi mince de l'élément de liaison (18).

4. Appareil domestique selon l'une des revendications précédentes, **caractérisé en ce que** la zone de logement (22) est de préférence un alésage, un col ou un filetage.

5. Appareil domestique selon la revendication 3 ou 4, **caractérisé en ce que** la zone de logement (22) est disposée au centre de l'élément de liaison (18).

6. Appareil domestique selon l'une des revendications précédentes, **caractérisé en ce que** l'élément de liaison (18) est réalisé dans la zone de bord en forme de godet par le biais d'un coude (30) périphérique, de préférence en forme de S.

7. Appareil domestique selon l'une des revendications précédentes, **caractérisé en ce que** l'élément de liaison (18) est réalisé de manière symétrique en rotation.

8. Appareil domestique selon l'une des revendications précédentes, **caractérisé en ce que** l'élément porteur (6) est une paroi, de préférence une paroi arrière (6) d'un compartiment de cuisson (2) de l'appareil de cuisson (1) et/ou l'élément rapporté (12) est une tôle déflectrice d'air de l'appareil de cuisson (1).

9. Appareil domestique selon l'une des revendications 1 à 7, **caractérisé en ce que** l'élément porteur (8) est une paroi, de préférence une paroi supérieure (8) d'un compartiment de cuisson (2) de l'appareil de cuisson (1) et/ou l'élément rapporté (14) est une fixation de corps de chauffe, de préférence un corps chauffant de grill (14) de l'appareil de cuisson (1).

10. Appareil domestique selon l'une des revendications précédentes, **caractérisé en ce que** l'élément porteur (6, 8) présente un alésage (20), dans lequel la zone de logement (22) dans l'élément de liaison (18) est conçue de manière concentrique par rapport à l'alésage (20) dans l'élément porteur (6, 8).

11. Appareil domestique selon l'une des revendications précédentes, **caractérisé en ce que** la vis (24) est une vis autotaraudeuse ou une vis autoformeuse, de préférence une vis à tôle.

12. Appareil domestique selon l'une des revendications précédentes, **caractérisé en ce que** l'élément de liaison (18) est formé à partir d'un métal apte à être soudé, de préférence à paroi mince, et/ou d'une matière plastique.

13. Appareil domestique selon l'une des revendications précédentes, **caractérisé en ce qu'**au moins l'élément porteur (6, 8) présente un revêtement, de préférence un revêtement en émail.

14. Procédé destiné à la fixation d'un élément rapporté (12, 14) à un élément porteur (6, 8) d'un appareil domestique (1) selon l'une des revendications 1 à 13, présentant les étapes de procédé suivantes :
- amenée de l'élément de liaison (18) à l'élément porteur (6, 8), dans lequel une zone de logement (22) est conçue de préférence de manière concentrique dans l'élément de liaison (18) pour la percée (22) dans l'élément porteur (6, 8),
- assemblage de l'élément de liaison (18) avec l'élément porteur (6, 8) au moyen d'un soudage, de préférence un soudage par résistance par bossage, dans lequel une saillie (28) fond sur une surface d'appui (26) de l'élément de liaison (18) et sert de matériau pour un joint de soudure avec l'élément porteur (6, 8), moyennant quoi les deux composants sont assemblés,
- amenée de l'élément rapporté (12, 14) au côté de l'élément porteur (6, 8) opposé à l'élément de liaison (18), dans lequel une percée est conçue, de préférence de manière concentrique, dans l'élément rapporté (12, 14) par rapport à la zone de logement (22) de l'élément de liaison (18) relié à l'élément porteur (6, 8),
- fixation de l'élément rapporté (12, 14) à l'élément porteur (6, 8), dans lequel l'élément rapporté (12, 14) est vissé de manière fixe à l'élément de liaison (18) au moyen d'un élément de vissage (24).

15. Procédé selon la revendication 14, présentant l'étape de procédé supplémentaire
- de revêtement de surface au moins de l'élément porteur (6, 8), en particulier d'une surface visible, de préférence au moyen d'un revêtement en émail, de préférence après l'assemblage de l'élément de liaison (18) avec l'élément porteur (6, 8) au moyen d'un soudage.
